Europäisches Patentamt

European Patent Office

Office européen des brevets

(11) Publication number : **0 497 632 A1**

# (12) EUROPEAN PATENT APPLICATION

(21) Application number : 92300874.2

(22) Date of filing : 31.01.92

(51) Int. Cl.⁵ : **B01J 47/02**

(30) Priority : **31.01.91 GB 9102057**

(43) Date of publication of application :
**05.08.92 Bulletin 92/32**

(84) Designated Contracting States :
**AT BE CH DE DK ES FR GB GR IT LI LU MC NL PT SE**

(71) Applicant : **THE PERMUTIT COMPANY LIMITED**
**14 Cavendish Place**
**London WIM 9DJ (GB)**

(72) Inventor : **Farrar, John**
**35 Avondale Road, South Croydon Surrey, CR2 6JE (GB)**

(74) Representative : **Jones, Helen Marjorie Meredith**
**Gill Jennings & Every 53-64 Chancery Lane London WC2A 1HN (GB)**

(54) Ion exchange apparatus and process.

(57) An apparatus and process for carrying out ion exchange of aqueous liquids, in particular directed to providing a small efficient system.

The apparatus comprises at least 3 beds of ion exchange material (6, 7, 8, 9) each bed being contained in a separate vessel (1, 2, 3, 4). The vessels are arranged in series to deliver liquid for ion exchange to both vessels of one ionicity successively. Each bed of ion exchange resin comprises resin beads having a particle size distribution of at least 80% within a 100μm range.

The apparatus and process enable efficient ion exchange at high service flow rates of from 40-100 $m^3/m^2$ bed area/hour.

Fig. 1.

The present invention relates to apparatus and process for carrying out ion exchange on aqueous liquids, in particular to fixed bed ion exchange using a small and efficient system.

There are many known apparatuses for conducting ion exchange on an aqueous liquid. These generally comprise a bed of ion exchange material or several sequentially arranged beds of different types of ion exchange material so that on passing an aqueous liquid in a service cycle through the apparatus, a product liquid with the desired characteristics is produced. The service cycle is following a regenerating cycle which regenerates the ionic exchange resin prior to the bed becoming exhausted and thus prior to the ion exchange becoming inadequate. For a deionising apparatus regeneration is by flow through the bed of acid or alkali, for cation or anion resins respectively. A water softener replaces scale-forming ions with non-scale forming ions such as alkaline metal ions and halide ions, and regeneration is usually by solutions of salts of such ions.

The beds of ion exchange resin materials can be arranged in various different ways. Generally, an ion exchange apparatus comprises two vessels, one containing cation exchange resin and the other contianing anion exchange resin. It is known that using successive cation and anion exchange a water sample can only be completely demineralised if the cation and anion exchange treatment is repeated at least once. Therefore, in terms of efficiency of an ion exchange bed it is preferable to use a mixed bed in which the cation and anion exchange resin are both provided in the same vessel, thus, cation and anionic exchange are repeated alternately, many times so a product of very high purity can be obtained.

It is also known to provide an ion exchange vessel in which different types of resin are stratified. Using resins of varying densities or sub-dividing a vessel into chambers can ensure that the various resins remain in position.

Although cation and anion exchanges are frequently accommodated in separate vessels it is disadvantageous to use separate vessels as it requires high expenditure on apparatus and high pressure loss can result between separate chambers due to required redistribution of liquids in subsequent chambers. Therefore, the general trend in the industry is to move away from separate vessels, as described in US 4,645,604. In US 4,645,604 a process is disclosed in which ion exchange is carried out in an ion exchange filter which contains cation and anion resins in separate layers in the same vessel and the disadvantages of separate vessels are described.

In order to provide efficient ion exchange and to minimise costs, the tendency therefore, has been to use preferably one ion exchange vessel containing a large volume of exchange resin and to try to maximise flow rates through the vessel. On a large scale, ion exchange vessels have been known up to a height of four metres or more although generally, for use in industrial plants they are around 2.5 to 3 metres high. Although they are cumbersome, these apparatuses are used because they provide efficient ion exchange and it has so far been found difficult to provide a small apparatus which will enable high flow rates and give efficient ion exchange.

It has surprisingly been found that a plurality of small vessels can be used to provide a small, efficient apparatus. In addition, in order to provide significantly improved performance it has been found the distribution in particle size of the beads of ion exchange resin is particularly important and the use of a specific narrow bead distributioon in an ion exchange resin bed enables effective water purification at high service flow rates.

The present invention comprises an apparatus for ion exchange comprising at least three beds of ion exchange material each bed being contained in a separate vessel, the vessels being arranged in series to deliver in use, liquid for ion exchange to both vessels of one ionicity, successively and each bed of ion exchange resin comprising resin beads having at least 80% within a 100μm range.

In spite of the teaching towards alternate cation and anion exchange it has been found that this apparatus can be used on a small scale, to provide a liquid of high purity. In particular, the narrow resin bead distribution i.e. narrow cut resin is significant in affecting the ion exchange moieties so that effective ion exchange results even at high flow rates. Preferably the resin beads in each bed of ion exchange resin have a particle size distribution of at least 90% within a 100μm range. Preferably, in use, the flow rate of aqueous liquid for ion exchange through the apparatus will be 40 to 100 $m^3/m^2$ bed area/hour. Thus, preferably the apparatus additionally comprises means for providing such a flow rate.

Preferably there are at least two cation vessels and at least two anion vessels and the vessels are arranged to deliver, in use, liquid for ion exchange to both vessels of one ionicity, in series, and subsequently to both vessels of the other ionicity, in series.

In order to produce a convenient compact apparatus, the ion exchange apparatus is arranged with some vessels positioned above other vessels. In one preferred arrangement there are two cation vessels and two anion vessels and preferably one cation vessel is positioned above the other cation vessel and likewise one anion vessel is positioned above the other anion vessel.

Preferably there are no valves between the two vessels of the same ionicity.

One additional problem encountered with ion exchange systems is that, particularly when regeneration of a bed is upflow, expansion and mixing of the bed may occur and this results in poor resin-regenerant contact and low regeneration efficiency. The present invention reduces this problem because if a bed of ion exchange material is disrupted, the smaller vessels are beneficial as less mixing of the bed occurs.

Preferably, even when one or more of the vessels is mounted above one another, the height of the apparatus is generally no greater than 2.5 metres, preferably below 1.75 metres and most preferably 1.5 metres, generally being above 0.5 metres, usually above 0.75 metres and preferably above 1 metre.

In addition to the height of the apparatus the overall volume of the apparatus can be minimised and the ground area of the whole apparatus including for example the pump, valves and control panel can be as low as $0.5m^2$, generally above $0.7m^2$, and usually below $2.5m^2$, preferably below $2m^2$ and usually being around $1.5m^2$. The vessels themselves are preferably small, generally having a total internal volume of from 10 litres to 1800 litres, most preferably from 15 to 300 litres.

The vessels can be made of any material that is non-interfering with the ion exchange process. Generally the vessels comprise a plastics material preferably reinforced plastics. Suitable preferred materials comprise polyvinylester, polypropylene or glass reinforced plastic having a separate polypropylene or other non-reinforced lining.

The cation resin can be any type of cation resin suitable for ion exchange and may be chosen for the requirements of a particular liquid for ion exchange.

Generally, an ion exchange apparatus will present a weak acid cation resin and subsequently a strong acid cation resin to fluid for ion exchange. This is generally the most efficient system because weak resin is more easily regenerated requiring less time and a smaller amount of chemical regenerant. However, in the present invention it has surprisingly been found that the efficiency is maximised if both cation vessels comprise strong cation resin as the benefit achieved in high water purity surprisingly outweighs the additional requirements for regeneration. Therefore, in a preferred aspect of the invention both cation vessels comprise strong cation resin.

Alternatively, different resins may be used in the same vessel, for example weak and strong can be stratified in the same vessel and this is preferably followed by strong acid in a second vessel. Different types of strong resin may be in the same vessel for example, those of different chemical type and/or particle size. For example more than one mixed resin could also be used in the apparatus.

The anion resin can be any anion resin and may be chosen for the particular requirement of the liquid for ion exchange. For example the anion exchange resin can be any of the conventional weak, strong or mixed anion resins. A mixed anion resin is one which includes both weak and strong anion exchange groups and this is generally used to replace either weak or strong resin. As explained above, it is generally thought to be disadvantageous to use strong resin when weak resin can be used and more efficiently regenerated. However, it has been found that the present apparatus produces the greatest efficiency when the first anion chamber comprises mixed resin and the second comprises strong resin. Alternatively, different types of anion resin may be in the same vessel such as those of different size and/or those which are chemically different. For example an anion vessel can contain two layers comprising firstly, weak and secondly strong anion resin. Preferably this is followed by a second anion vessel comprising strong resin.

Ion exchange resins are generally provided in a particulate form and the size of the particles is also important. Small particle size resin beads produce a high pressure drop through a vessel whereas large resin particles are less efficient during ion exchange itself. In the present apparatus, narrow cut resins in which the particle size distribution is low are preferred. Generally, the particle size of the ion exchange resins is from 300 to $1200\mu m$, preferably 300-750 and most preferably 400 to 700 $\mu m$. The mean particle size is preferably from 350 to 700, most preferably from 400 to 650. The particle size is determined by the mesh size through which the beads can pass. The mean is the weight average.

When the ion exchange resins used have small particle size, in order to prevent blockage of the inlet and outlet valves at the top of the vessels, preferably large beads of resin, typically of diameter 1 to 1.5mm and preferably having density below $1 \times 10^3 kg/m^3$, generally around $0.85kg/m^3$ are placed at the top of the vessel, above the ion exchange resin bed. These larger beads may be of the same material for example cationic or anionic as the remainder of the bed in the vessel or they may be inert resin beads. For greatest efficiency, preferably the material is inert as this helps to distribute the flow before the water meets active resin in the vessel thereby making the best use of the active resin. Suitable large particles are preferably also placed at the bottom of each vessel.

The present invention also includes a process for ion exchange comprising a service cycle in which the fluid for ion exchange is passed through at least three beds of ion exchange material each bed being contained in a separate vessel, the vessels being arranged in series to deliver liquid for ion exchange to both vessels of the same ionicity, successively and in which each bed of ion exchange resin comoprises resin beads having a particle size distribution of at least 80% with within a $100\mu m$ range and the flow rate of fluid for ion exchange through the apparatus is from 40 to 100 $m^3/m^2$ bed area/hour.

The apparatus can be in the form of any of the arrangements as described above. Preferably each bed of ion exchange resin comprises resin beads having a particle size distribution of at least 90% within a 100μm range.

Preferably, the liquid flows through each vessel in a downward direction with counterflow regeneration. Preferably regeneration is achieved by flow of regenerant through both beds of the same ionicity in series, the regenerant flowing from one immediately through the other.

Preferably also, the regeneration of the ion-exchange material always occurs in the vessels, no removal of ion exchange material being necessary.

In the ion exchange process, using the apparatus as described, the flow rate of the liquid during the service cycle is from 40 to 100m$^3$ liquid per m$^2$ bed area per hour. The regenerant flow rate is preferably at least 10 and most preferably at least 15 m$^3$/m$^2$/hour generally being up to 80 m$^3$/m$^2$/hour although usually less than 50 m$^3$/m$^2$/hour. Thus, the service flow is generally operated at rates above 40 bv/h (bed volumes/hour), generally below 100 bv/h and preferably below 80 bv/h.

Warm regenerant liquid produces more effective regeneration of an ion exchange bed. However, the usual systems in which the apparatus has a very large volume, require a large volume of regenerant and it becomes impracticable to provide warm regenerant for such large systems. Thus, the present invention is additionally advantageous because using the present apparatus, it becomes practicable to use warm regenerant.

The apparatus described above can be used in conjunction with various additional ion-exchange means. For example, a liquid for ion exchange can be filtered before entering the first ion exchange vessel of the apparatus. Suitable filters include, for example, cartridge filters such as paper cartridge filters, conventional sand, carbon or manganese greensand filters or preferably a filter comprising a filter arrangement as described in British patent application number 90080227.

The apparatus can also be used in conjunction with degassers. Water can be degassed prior to entry into the first ion exchange vessel or more usually, prior to an anion vessel, the water having already passed through cation exchange. This is because in deionisation processes, carbon dioxide is produced by the exchange of cations associated with carbonate and/or bicarbonate ions in the water for hydrogen ions from the cation region. Suitable degassers include conventional degassers with an air blower and packed tower or a vacuum degasser.

The process of the invention is of most benefit for a deionising process, although may be of some value for water-softening processes.

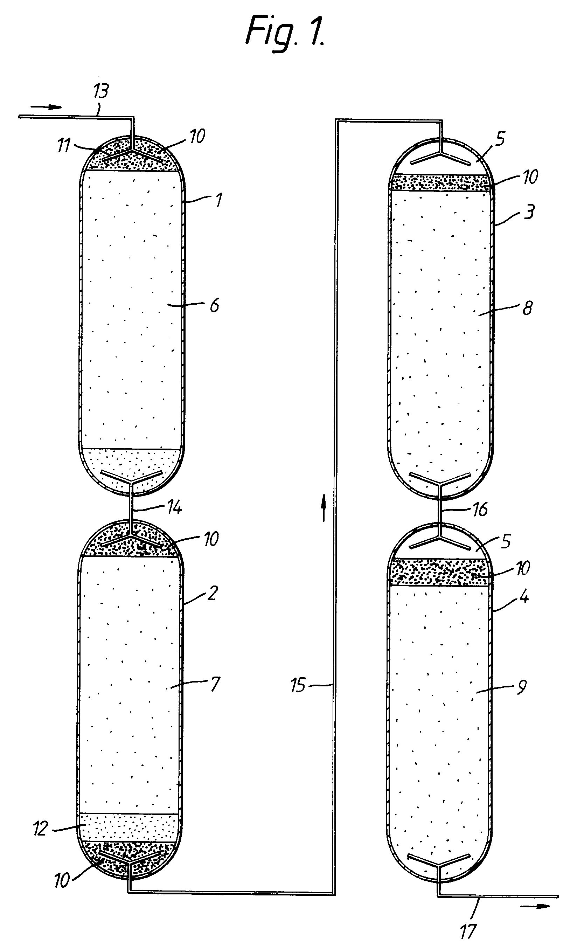

The invention is now described with reference to figure 1 which shows a preferred apparatus in accordance with the invention.

As shown in figure 1, the apparatus consists of a two cation resin vessel, 1, 2 joined in series and two anion resin vessels 3, 4 also joined in series. There is free space 5 above the beds of anionic resin in vessels 3 and 4 into which the bed can expand during the regeneration cycle.

The cation vessel 1 and 2 both contain a bed of strong acrylic cationic exchange resin 6 and 7, the resin having a narrow cut particle size. The anion vessels 3 and 4 both comprise a bed of anion exchange material, vessel 3 holding a bed of mixed base anionic exchange resin 8 and vessel 4 holding a bed of strong anion exchange resin 9.

The particle size distribution of the ion exchange resin beads of each of the ion exchange resin beds is as follows:

## Cation Exchange Beds 6 and 7

| Particle Size (μm) | Percentage (by weight) |
|---|---|
| 450-550 | 92.5 |
| above 550 | 2.0 |
| 450-350 | 5.0 |
| below 350 | 0.5 |

Anion Exchange Bed 8

| Particle Size (μm) | Percentage (by weight) |
|---|---|
| 550-650 | 92.5 |
| above 650 | 2.0 |
| 450-550 | 5.0 |
| below 450 | 0.5 |

Anion Exchange Bed 9

| Particle Size (μm) | Percentage (by weight) |
|---|---|
| 450-550 | 92.5 |
| above 550 | 2.0 |
| 350-450 | 5.0 |
| below 350 | 0.5 |

At the top of each cation vessel is a layer of inner resin of large particle size 10 which prevents the smaller particles size cation resin of the ion exchange bed from blocking the fluid inlets 11.

Likewise a layer of the larger particle size inert resin is also provided above the beds of anion exchange resin for the same purpose. In the anion resin the particles size of the beds is larger and so the risk of blocking the fluid in inlets and outlets is lower. Thus, there is no inert resin layer at the bottom of either of these vessels. The presence of the inert material is at the top of the column is mainly to prevent any carriers of anionic exchange resin into the cation chambers during regeneration.

Additionally, above the lower layer of inert resin in vessel 2 (lower cation vessel) is a layer of SILEX to help acid distribution during the regeneration step which improves quality and efficiency of the process, good distribution at the base of the second cation vessel being crucial to the efficiency of the system.

During service flow influent in pure water flows through line 13 into the inlet 11 at the top of a cation vessel 1, through the bed 6 it then passes out of vessel 1 via line 14 into vessel 2. After passing through cation bed 7, it goes out of bed 1 along line 15 and into the top of the anion vessel 3, through anion bed 8 and then at leaving vessel 3 the liquid flows along line 16 and into vessel 4, flowing through anion bed 9 and out through line 17 at the base of that vessel.

When the beds are exhausted they are regenerated preferably by counterflow regeneration.

**Claims**

1. An apparatus for ion exchange comprising at least three beds of ion exchange material (6, 7, 8, 9), each bed being contained in a separate vessel (1, 2, 3, 4) and the vessels being arranged in series, to deliver, in use, liquid for ion exchange to both vessels of one ionicity successively and each bed of ion exchange resin comprising resin beads having a particle size distribution of at least 80% (by weight) within a 100μm range.

2. An apparatus according to claim 1 comprising means for providing a service flow rate of from 40 to 100m³/m² bed area/hour.

3. An apparatus according to claim 1 or claim 2 in which there are at least two cation vessel (1, 2) and at least two anion vessels (3,4), arranged in series to deliver in use liquid for ion exchange to at least two vessels of one ionicity, successively, and subsequently to at least two vessels of the other ionicity, successively.

4. An apparatus according to any preceding claim which is arranged in use, with at least one vessel positioned above at least one other vessel.

5. An apparatus according to any preceding claim in which there are two cation vessels and two anion vessels and one cation vessel (1) is positioned above the other cation vessel (2) and one anion vessel (3) is positioned above the other anion vessel (4).

6. An apparatus according to any preceding claim in which each bed of ion exchange resin comprises resin beads having a particle size distribution of at least 90% within a 100μm range.

7. An apparatus according to any preceding claim having a ground area of from 0.7 m$^2$ to 2 m$^2$.

8. An apparatus according to any preceding claim in which there are at least two cation vessels in series, both comprising strong cation resin.

9. An apparatus according to any preceding claim comprising at least two anion vessels in series, the first anion resin comprising mixed resin and the second comprising strong resin.

10. An apparatus according to any preceding claim in which the area particle size of the ion exchange resin beads in each bed is from 350 to 700μm.

11. A process for ion exchange comprising a service cycle in which the fluid for ion exchange is passed through at least three beds of ion exchange material (6, 7, 8, 9), each bed being contained in a separate vessel (1, 2, 3, 4), the vessels being arranged in series to deliver liquid for ion exchange to both vessels of the same ionicity successively and in which each bed of ion exchange resin comprises resin beads having a particle size distribution of at least 80% within a 100μm range and the flow rate of fluid for ion exchange through the apparatus is from 40 to 100 m$^3$/m$^2$ bed area/hour.

12. A process according to claim 11 in which during a service cycle in which aqueous liquid is deionised, the aqueous liquid flows through each vessel in a one direction, preferably in a downward direction, and during a regenerating cycle in which ion-exchange material is regenerated, regenerating liquid flows in a counterflow direction through each vessel.

13. A process according to claim 11 or 12 in which the ion-exchange material is regenerated in situ, ion the ion exchange vessels and regeneration comprises passing a regenerant through both vessels comprising beds of the same ionicity, successively.

14. A process according to any of claims 11 to 13 including a regenerant cycle after the service cycle in which the flow rate of regenerant during the regeneration cycle is from 15m$^3$ per m$^2$ per hour to 80 m$^3$/m$^2$/hour.

15. A process according to any of claims 11 to 14 in which the liquid for ion exchange is filtered prior to entry into the first ion exchange vessel of the apparatus using a cartridge filter.

16. A process according to any of claims 11 to 15 in which each bed of ion exchange resin comprises resin beads having a particle size distribution of at least 90% within a 100μm range.

# Fig. 1.

**European Patent Office**

## EUROPEAN SEARCH REPORT

Application Number

EP 92 30 0874

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 91, no. 22, 22 November 1979, Columbus, Ohio, US; abstract no. 181230X, ARAI: 'ION EXCHANGE RESIN REGENERATION IN WATER PURIFICARTION' page 376 ; * abstract * & JP-A-5 475 477 (ORGANO) 16 June 1979 --- | 1,3,11, 13 | B01J47/02 |
| A | US-A-3 382 169 (THOMPSON) 7 May 1968 * column 1, line 20 - line 32 * * column 2, line 52 - column 5, line 12 * --- | 1,3, 10-13 | |
| A | US-A-3 617 558 (JONES) 2 November 1971 --- | | |
| A | US-A-3 359 199 (SCHMIDT) 19 December 1967 --- | | |
| A | DE-A-1 442 423 (HAGER&ELSASSER) 31 October 1968 * page 5, paragraph 3 * --- | 1,11 | |
| A | US-A-3 618 589 (TAVANI) 9 November 1971 --- | | TECHNICAL FIELDS SEARCHED (Int. Cl.5) |
| A | GALVANOTECHNIK vol. 55, no. 10, 15 October 1964, SAULGAU/WURTT. pages 589 - 611; HEFELE: 'ERPROBTE SPUL- UND RUCKGEWINNUNGSMETHODEN SENKEN DIE UNKOSTEN UND ERLEICHTERN DIE ABWASSERFRAGE' * page 609, column 2 - page 611, column 1; figure 19 * ----- | 1,3,11, 15 | B01J |

The present search report has been drawn up for all claims

| Place of search | Date of completion of the search | Examiner |
|---|---|---|
| THE HAGUE | 10 APRIL 1992 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)